# EUROPÄISCHE PATENTSCHRIFT

(11) **EP 1 080 502 B1**
(45) Veröffentlichungstag und Bekanntmachung des Hinweises auf die Patenterteilung: **10.07.2002**
(21) Anmeldenummer: 99917997.1
(22) Anmeldetag: 19.04.1999
(51) Int. Cl.: H01L 41/04

(54) **SCHALTUNGSANORDNUNG ZUR DYNAMISCHEN ANSTEUERUNG VON KERAMISCHEN FESTKÖRPERAKTOREN**
CIRCUIT FOR THE DYNAMIC CONTROL OF CERAMIC SOLID-STATE ACTUATORS
CIRCUIT POUR L'EXCITATION DYNAMIQUE D'ACTUATEURS SOLIDES CERAMIQUES

(30) Priorität: 23.04.1998 DE 19818273; 05.06.1998 DE 19825210
(43) Veröffentlichungstag der Anmeldung: 07.03.2001
(73) Patentinhaber: GSG Elektronik Gmbh, 83022 Rosenheim (DE); Physik Instrumente (PI) GmbH & Co Produktions- & Marketing Kommanditgesellschaft, 76337 Waldbronn (DE)
(72) Erfinder: KNAUSS, Uwe, D-83209 Prien-Atzing (DE)
(74) Vertreter: Kruspig, Volkmar, Dipl.-Ing.
(86) Internationale Anmeldenummer: EP9902625
(87) Internationale Veröffentlichungsnummer: WO9956327

(56) Entgegenhaltungen:
- WO-A-99/07026
- DE-A- 4 435 832
- PATENT ABSTRACTS OF JAPAN vol. 016, no. 282 (M-1269), 23. Juni 1992 (1992-06-23) & JP 04 071859 A (BROTHER IND LTD), 6. März 1992 (1992-03-06)

## Beschreibung

Die Erfindung betrifft eine Schaltungsanordnung zur dynamischen Ansteuerung von keramischen Festkörperaktoren, wie z.B. Piezotranslatoren mit Energierückgewinnung durch magnetische Zwischenspeicher gemäß Oberbegriff des Patentanspruchs 1 sowie einen Regelkreis zum Betreiben eines Piezotranslators.

Piezotranslatoren sind elektrisch steuerbare Stellelemente, deren Funktionen auf den piezoelektrischen Effekt zurückzuführen sind. Aktive Sensoren, sogenannte Aktuatoren, können feinste Stellbewegungen vom Subnanometer- bis in den Millimeterbereich hinein mit hoher Genauigkeit ausführen.

Piezotranslatoren stellen in elektrischer Hinsicht einen Kondensator dar, dessen Ladungsinhalt in einem proportionalen Verhältnis zu seiner Ausdehnung steht. Demnach nehmen Piezotranslatoren nur während des Ausdehnungsvorgangs Energie auf. Die Ausdehnung bleibt ohne weitere Energiezufuhr aufrechterhalten. Aufgrund der hohen Kapazität der Piezotranslatoren sind jedoch bei schnellen Lageänderungen, wie sie im dynamischen Betrieb auftreten, hohe Ausgangsleistungen der Treiberschaltung notwendig. Die entsprechende Steuerelektronik muß daher für jeden Anwendungsfall besondere Eigenschaften haben und optimiert werden, um eine erfolgreiche Applikation eines Piezotranslators zu gewährleisten.

Bei Regelprozessen zur dynamischen Piezosteuerung, wo das Stellelement schnellen Änderungen einer Einheitsgröße nachgeführt werden muß, soll der Amplitudenverlauf der Bewegung möglichst gut mit dem Eingangssignal übereinstimmen. Ein solches lineares Übertragungsverhalten kann jedoch nicht bis zu beliebig hohen Frequenzen gewährleistet werden, sondern wird durch die Resonanzfrequenz des Translators bzw. des gesamten Stellsystems einerseits und durch die Ausgangsleistung des Verstärkers andererseits begrenzt.

Aufgrund der Hystereseerscheinungen eines Piezotranslators ist die absolute Ausdehnung des Stellelements nur ungenau über die angelegte verstärkte Eingangsspannung des Verstärkers bestimmbar. Die sich einstellende Ausdehnung ist, sowohl was deren Absolutgröße als auch deren relative Bewegungen betrifft, mit einem Fehler von bis zu 10% behaftet. Um diesen Fehler auszuschalten, ist es bekannt, geschlossene Regelkreise, also ein Meßsystem für die Ausdehnung und eine Regelelektronik, die die Betriebsspannung entsprechend einem Soll-Istwertvergleich steuert, vorzusehen. Geschlossene Positionsregelkreise verfügen daher über einen externen Meßtaster, um die Position bestimmen zu können.

Da, wie erwähnt, Piezotranslatoren sich elektrisch als Kondensator beschreiben lassen, auf den für eine Längenänderung elektrische Ladungen aufgebracht bzw. entnommen werden müssen, was beispielsweise über einen elektronischen Schalter realisiert werden kann, resultiert durch das Laden oder Entladen zwischen den Komponenten Piezotranslator einerseits und dem Ladestromkreis andererseits zwangsläufig Verlustleistung, falls das über steuerbare veränderliche Widerstände, z.B. einen Transistor geschieht.

Aus dem Abschlußbericht zum Verbundprojekt "Entwicklung leistungsoptimierter, hybrider Hydraulikkomponenten auf der Basis piezoelektrischer Aktuatoren" des Instituts für Fertigungstechnik und spanende Werkzeugmaschinen, Hannover, November 1996, ist es bekannt geworden, digitale Steuerverstärker zum Antreiben von piezoelektrischen Aktuatoren aufzubauen, welche über eine geregelte Energierückgewinnung verfügen. Die bekannte Endstufe besitzt vorzugsweise induktiv gekoppelte Spulen, um den Wirkungsgrad der Energierückgewinnung zu erhöhen.

Bei der bekannten Schaltungsanordnung sind zwei getrennte magnetische Energiezwischenspeicher vorgesehen, wobei die Zwischenspeicher zur Erzielung einer vorgegebenen Ausgangs-Spannungskurve der Ansteuerschaltung von einem Regler getaktet zugeschaltet werden. Am Piezotranslator ergibt sich dann eine spannungsabhängige nichtlineare Aufladung der Kapazität, wobei mit Erreichen der Versorgungsspannung der verfügbare Strom nachläßt. Schaltungsbedingt kann durch die Ausführung als zweier getrennter Sperrwandler jeweils nur eine Richtung des Ausgangsstroms getrieben werden.
Um einen gewünschten linearen Spannungsanstieg am Piezotranslator zu erhalten, muß beim Stand der Technik das Speichervolumen jedes Speichers extrem groß ausgelegt werden. Dies deshalb, da der Sperrwandler nach dem geringsten Spannungsanstieg ΔU an den Bereichsenden der Betriebsspannung zu dimensionieren ist. Im mittleren Ausgangsbereich hingegen ist das verfügbare Speichervolumen nicht auslastbar, so daß ein entsprechend realisierter Ausgangsverstärker ineffektiv arbeitet.

Bezogen auf die Regelung von Piezotranslatoren bei praktischen Anwendungen wird der tatsächliche Momentanwert der dem Piezotranslator zugeführten Ausgangsspannung mit Hilfe eines Regelkreises bestimmt. Dieser soll vorhandene Unzulänglichkeiten der Ansteuerschaltung respektive der Endstufe, wie deren Nichtlinearität, Temperaturdrift und Frequenzabhängigkeit als auch ein ungewünschtes Verhalten des angeschlossenen Piezotranslators aufgrund der bereits erwähnten Spannungshysterese ausgleichen.
Hierfür ist es bekannt geworden, einen Teil der Piezoausgangsspannung als Istwert auf den Eingang eines Fehlerverstärkers zu geben oder ein exakt arbeitendes mechanisches Meßsystem anzuwenden, welches eine Ausgangsspannung als Führungsgröße liefert. Dem weiteren Eingang des Fehlerverstärkers wird der gewünschte Sollwert zugeführt, wobei der Ausgang des Verstärkers auf die eigentliche Ansteuerschaltung führt.

Das oben beschriebene Reglerkonzept erreicht zufriedenstellende Ergebnisse bei nicht energierückführenden Anordnungen, die meist mit einer konventionell verlustbehafteten Endstufe nach Art gesteuerter Vorwiderstände ausgerüstet sind. Probleme ergeben sich jedoch bei einer entsprechenden Verwendung in energierückspeisenden Ansteuerschaltungen. Ursache sind die dort in Serie zum Piezotranslator eingefügten erheblichen Induktivitäten, die die gewünschte Energierückführung bewirken. Diese bilden mit dem Piezotranslator, der einen Kondensator darstellt, einen Serien- oder Resonanzkreis hoher Güte. Dessen Resonanzfrequenz liegt je nach Bauart oder Baugröße des Translators und eingesetzter Induktivität meist innerhalb des für den Verstärkerbetrieb interessierenden Frequenzbandes im Bereich von 1 bis 5 kHz. Der Serienresonanzkreis wiederum bewirkt eine starke Anhebung der Verstärkung im Resonanzbereich einhergehend mit einer zusätzlichen unerwünschten Phasenverschiebung im Arbeitsband des Regelkreises, so daß diese an die kritische 180°-Grenze heranreicht, wodurch die Kompensation des Regelkreises erschwert ist. Hieraus resultiert ein unerwünschtes Nachschwingen oder eine Selbsterregung. Der gewünschte flache Amplitudengang des Gesamtsystems bis hin zum oberen Arbeitsfrequenzbereich ist demnach nicht mehr erreichbar.

Es ist daher Aufgabe der Erfindung, eine Schaltungsanordnung zur dynamischen Ansteuerung von Piezotranslatoren mit Energierückgewinnung sowie einen verbesserten Regelkreis zum Betreiben von Piezotranslatoren anzugeben, die es gestatten, den Piezotranslator über den gesamten Spannungsbereich nahezu linear aufzuladen und gleichzeitig die Energierückführung bei geringem Bauvolumen der realisierten Schaltung zu optimieren. Gleichzeitig sollen energierückspeichernde Elemente wie Kondensatoren oder Akkumulatoren mit einer maximalen Piezotranslator-Versorgungsspannung betrieben werden können, so daß die Rückströme dementsprechend gering gehalten werden können. Hinsichtlich des Regelkreises gilt es, Resonanzstellen im Arbeits- und Übertragungsbereich zu vermeiden, so daß eine Selbsterregung wirksam verhinderbar ist.

Die Lösung der Aufgabe der Erfindung erfolgt mit einem Gegenstand, wie er im geltenden Patentanspruch 1 sowie hinsichtlich der Regelung in den Ansprüchen 4 und 5 definiert ist.
Die weiteren Unteransprüche stellen mindestens zweckmäßige Ausgestaltungen oder Weiterbildungen der Erfindung dar.

Der Grundgedanke der Erfindung besteht darin, die Ansteuerschaltung zum dynamischen Betreiben von Piezotranslatoren als Halbbrückenschaltung mit einer einzigen Serienspule als Energie-Zwischenspeicher auszubilden. In diesem Falle ist der für den Piezotranslator zur Verfügung stehende maximale Lade- und Entladestrom identisch mit dem maximalen Strom der Serienspule. Eine derartige Begrenzung tritt im gesamten Bereich der Piezoausgangsspannung unverändert und bei einem konstanten Grenzstrom auf. In der Kapazität des Piezotranslators bewirkt der konstante Grenzstrom einen konstanten Spannungsanstieg, so daß das Speichervolumen des Energie-Zwischenspeichers im gesamten Arbeitsbereich gleichmäßig und voll ausgelastet ist. Das Bauvolumen läßt sich aufgrund der Verwendung einer einzigen Serienspule reduzieren, wodurch eine Kostensenkung die mittelbare Folge ist.

Erfindungsgemäß wird also eine gleichstromüberlagerte einzige Spule als Energie-Zwischenspeicher eingesetzt, wobei diese von ihrer Wirkung her als Durchflußwandler zu betrachten ist. Der Spulengleichstrom fließt während der gesamten Aktivierungsperiode und wird von einem hochfrequenten Wechselstrom mit relativ kleiner Amplitude im Arbeitstakt der Halbbrücken, d.h. der eingesetzten Schalter, mit einer Frequenz von im wesentlichen 100 kHz moduliert.

Mit der erfindungsgemäßen Anordnung eines einzigen induktiven magnetischen Zwischenspeichers im Sekundärkreis, welcher mit dem Piezotranslator in Reihe angeordnet ist und wobei der Sekundärkreis als Halbbrücke aufgebaut wird, gelingt es, den Wirkungsgrad der so ausgebildeten Leistungsendstufe deutlich zu erhöhen. Aufgrund der nicht vorhandenen inneren Potentialtrennung ist eine weitere Reduzierung der Verluste möglich. Auch ansonsten gegebene Nachteile durch Spannungsverluste an Rückspeisedioden treten nicht in vergleichbarem Umfang auf. Ein Übertragen der gesamten im Piezotranslator befindlichen Energie in jeder Modulationsschwingung auf die Primärseite und wieder zurück, wie dies beim Stand der Technik der Fall ist, wird nicht notwendig.

Dadurch, daß der einzige Energiespeicher auf der Sekundärseite liegt und mit der hohen Piezospannung beaufschlagt wird, welche je nach Translatortyp zwischen 100 bis 1200 V liegt, können die während der Energierückführung auftretenden Ströme klein gehalten werden. Der einzige Zwischenspeicher kann schaltungstechnisch räumlich dicht bezogen auf den Piezotranslator angebracht werden, so daß elektromagnetische Störstrahlungen auf ein Minimum reduzierbar sind. Eine weitere verbesserte elektromagnetische Verträglichkeit ergibt sich durch das Verhältnis des Modulationsnutzstroms, dem nur ein geringer hochfrequenter Wechselstrom entsprechend der externen Taktung der Halbbrücken überlagert ist. Durch eine entsprechende Dimensionierung des induktiven Zwischenspeichers liegt der überlagerte Wechselstrom in einer Größenordnung von im wesentlichen 10% des Modulationsstroms, so daß die Restwelligkeit stark reduziert ist.

Ein weiterer Grundgedanke der Erfindung liegt darin, daß bei der Verwendung von MOSFETs als Schalter negative Auswirkungen von vorhandenen internen Inversdioden vermieden werden können. Hierfür wird in einer Ausgestaltung zur Erfindung vorgeschlagen, zur Schaltstrecke eine externe Sperrdiode in Reihe zu schalten und diese Reihenschaltung von einer entgegengesetzt gepolten Kommutierungsdiode zu überbrücken. Diese zusätzliche Diodenkombination verhindert ' den Inversbetrieb des MOS-Transistors durch dessen interne Inversdiode und ermöglicht einen quasi externen Inversbetrieb durch die zur externen Sperrdiode entgegengesetzt gepolte Kommutierungsdiode.

Die zusätzlichen Dioden weisen eine bezogen auf den MOS-Transistor kleinere Erholzeit auf, um den Betrieb der derart variierten Halbbrückenschaltung unter dem Schaltfrequenzaspekt wesentlich zu verbessern.

Beim erfindungsgemäßen Regelkonzept wird gemäß einem weiteren Grundgedanken der Erfindung zur Regelung des Piezotranslators im Sekundärkreis ein Stromsensor zur Bestimmung einer dem Ausgangsstrom proportionalen Steuerspannung angeordnet. Dieser Stromsensor führt auf den Eingang eines ersten Reglers, wobei der zweite Eingang des ersten Reglers am Ausgang eines zweiten Reglers anliegt, an dessen Eingängen ein vorgegebener Sollwert entsprechend der mechanischen Position des Piezotranslators und die reduzierte Ausgangsspannung anliegt.

Demnach besteht das Regelkonzept aus zwei ineinander verschachtelten getrennten, nämlich einem inneren und einem äußeren Regelkreis. Der innere Regelkreis umschließt die eigentliche Ansteuerschaltung einschließlich einer möglichen kritischen Resonanzstelle, die durch die dort in irgendeiner Form vorhandenen magnetischen Energiespeicher und die kapazitive Last des Piezotranslators gebildet wird.
Mit Hilfe des äußeren Regelkreises gelingt es, den durch das Eingangssignal, d.h. den Sollwert der Position festgelegten und am Verstärkerausgang mit verstärkter Amplitude erwarteten Verlauf der Ausgangsspannung zu erzeugen.

Dadurch, daß der innere Regelkreis die Resonanzstelle und die damit verbundene zusätzliche Phasenverschiebung im Arbeitsfrequenzbereich bereits beseitigt hat, kann der äußere Regelkreis in einfacher Weise optimiert werden. Insgesamt ist mit der Auslegung der Schaltungsanordnung zur Regelung ein verbessertes Gesamtübertragungsverhalten gegeben. Der Amplitudengang ist im gesamten Frequenzbereich, auch über die Stelle des kritischen L-C-Kreises hinweg gleichmäßig und fällt ohne Sprungstelle ab. Der Phasengang weist eine Phasenreserve von mindestens 50° auf und ist unkritisch, wobei das Zeitverhalten bei maximaler Systemdynamik resonanz- und überschwingungsfrei gehalten werden kann.

Wie dargelegt, arbeitet der innere Regelkreis unter Rückgriff auf ein stromproportionales Sensorsignal, wobei hierfür ein Stromwandler vorgesehen ist. Dieser Stromwandler kann durch einen einfachen Serienwiderstand in der Rückleitung des Laststroms oder durch eine Transformatorschaltung umgesetzt werden. Der innere Regelkreis erzwingt demnach am Ausgang der Endstufe bzw. Ansteuerschaltung einen in die Last fließenden und in seinem Wert vorbestimmten Strom, der in seinem zeitlichen Verlauf durch den vorgegebenen Sollwert gesteuert werden kann. Möglicherweise weitere zur kapazitiven Piezotranslatorlast geschaltete Verbraucher, wie z.B. eine Speicherspule wirken sich nicht auf den gemeinsamen Laststrom aus und können auch keine Resonanzerscheinungen hervorrufen.

Da die am Piezotranslator sich aufbauende Spannung, wie bei Kondensatoren üblich, durch das Integral des fließenden Stroms definiert ist, der nunmehr geregelte Strom jedoch keine Resonanzstelle mehr besitzt, kann auch die Piezospannung resonanzfrei gehalten werden. Die zur Energierückführung eingebrachte Zwischenspeicher-Induktivität wird vom Regelverhalten des inneren Regelkreises als resonanzerzeugendes Bauteil nicht mehr wahrgenommen und damit nach außen eliminiert.

In einer Ausführungsform der Erfindung wird gemäß einem weiteren Grundgedanken eine zusätzliche Positionsregelung des Systems vorgenommen, indem ein dritter Regler vorgesehen ist, an dessen erstem Eingang der Sollwert der mechanischen Position des Piezotranslators und an dessen zweitem Eingang ein über einen Sensor erfaßter, mechanischer Istwert des Piezotranslators anliegt, wobei der Ausgang des dritten Reglers auf einen der Eingänge des vorerwähnten zweiten Reglers führt.

Das dynamische Verhalten des Regelkonzepts mit innerem und äußerem Regelkreis kann erfindungsgemäß nach einem weiteren Grundgedanken dadurch verbessert werden, daß der zweite Regler anstelle einer Regelung einer zum Sollwert porportionalen Ausgangsspannung das Integral des Piezotranslator-Stroms rückführt. Diese alternative Rückführung kann frequenzabhängig aktiviert werden.
Bei einem bevorzugten Ausführungsbeispiel wird bei Frequenzen von im wesentlichen >10Hz auf den Integrationswert zurückgegriffen und bei Frequenzen <10Hz die erwähnte Spannungsrückführung durchgeführt.

Der beschriebene Vorteil der verbesserten Vorsteuerung wirkt sich auch in denjenigen Regelkreisen positiv aus, welche auf eine zusätzliche Positionsregelung mittels eines weiteren Reglers verzichten. Diese Vorteile greifen insbesondere am oberen Ende des Arbeitsfrequenzbereichs, wo die Schleifenverstärkung aus Gründen der Stabilität des Betriebs abnehmen muß und daher für eine effektive Fehlerausregelung zu klein ist.

Die Erfindung soll nachstehend anhand von Ausführungsbeispielen sowie unter Zuhilfenahme von Figuren näher erläutert werden.

Hierbei zeigen:
- Fig. 1: ein Prinzipschaltbild der Schaltungsanordnung zur dynamischen Ansteuerung von Piezotranslatoren mit Energierückgewinnung;
- Fig. 2: eine Ausgestaltung eines MOSFET-Schalters mit externer Sperr- und hierzu entgegengesetzt gepolter Kommutierungsdiode;
- Fig. 3: ein Blockschaltbild eines Regelungskonzepts mit innerem und äußerem Regelkreis enthaltend die fakultative Möglichkeit, den äußeren Regelkreis auf den Integrationswert des Piezotranslator-Stroms auszurichten;
- Fig. 4: eine Darstellung des Regelungskonzepts mit zusätzlicher Positionsregelung;
- Fig. 5: ein Blockschaltbild zur Reduzierung des niederfrequenten Spannungsrauschens; und
- Fig. 6: ein Blockschaltbild einer bekannten Feinregelung.

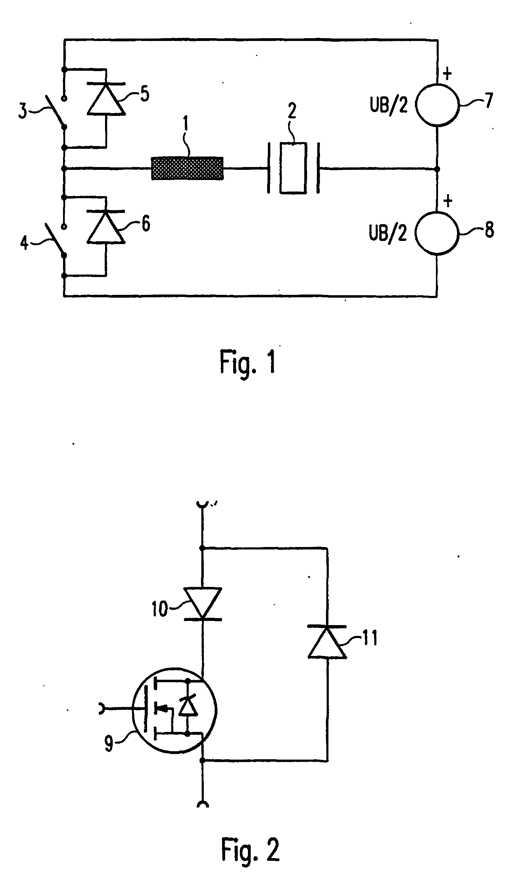

Das Prinzipschaltbild gemäß Fig. 1 stellt eine Schaltungsanordnung zur dynamischen Ansteuerung von Piezotranslatoren dar.

Wie ersichtlich, ist ein einziger induktiver Zwischenspeicher 1 in Reihe mit dem Piezotranslator 2 angeordnet. Der gezeigte Sekundärkreis stellt eine Halbbrückenanordnung dar, wobei Schalter 3 und 4 extern mit bis zu 100 kHz getaktet werden. Die Schalter 3 und 4 sind von Rückspeisedioden 5 und 6 überbrückt. Derartige Dioden sind bei der Ausbildung der Schalter 3 und 4 als MOSFET integraler Bestandteil dieser Transistorfamilie.

Spannungsquellen 7 und 8 je Halbbrücke werden durch ein an sich bekanntes Schaltnetzteil gebildet und weisen nicht gezeigte Speicherkapazitäten geeigneter Größe auf.

Der fließende Spulengleichstrom wird von einem amplitudenseitig kleinen hochfrequenten Wechselstrom im Arbeitstakt der Halbbrücken überlagert. Der einzige Energiespeicher 1 reduziert in räumlicher Hinsicht das Speichervolumen und arbeitet sowohl bei der Aufladung als auch der Entladung der Kapazität des Piezotranslators 2, d.h. über die volle Betriebszeit.

Die Schaltungsverluste gemäß Anordnung nach Ausführungsbeispiel sind bezogen auf den bekannten Stand der Technik wesentlich kleiner. Zur Erzielung einer vorgesehenen linearen Ausgangsspannungskurve werden die Schalter 3 und 4 von einem entsprechenden Regler mit hoher Takt- oder Schaltfrequenz aktiviert. Das Verhältnis der Schließzeiten von Schalter 3 und 4 bestimmt die Arbeitsrichtung "Aufladen" oder "Entladen". Am Piezotranslator 2 stellt sich eine lineare Aufladung von seiner Kapazität im gesamten Spannungsbereich von 0 bis maximal UB ein.

Mit Hilfe der Fig. 2 sei eine bevorzugte äußere Beschaltung eines MOS-Transistors bzw. eines MOSFETs zur Verwendung in der Schaltungsanordnung nach Fig. 1 näher erläutert.

Schaltungstechnisch bedingt sind in den Endstufen der Halbbrücke nach Fig. 1 die erwähnten Schalter 3 und 4 eingesetzt. Dieses Verbinden des Zwischenspeichers 1 geschieht abwechselnd mit der oberen bzw. der unteren Versorgungsspannung UB/2. Maximal einer der beiden Schalter 3; 4 ist geschlossen. Aufgrund der Ausführungsform der Schaltungsanordnung treten an den Schaltern 3 und 4 sowohl Ströme mit positivem als auch mit negativem Vorzeichen auf. Beispielsweise fließt zeitweise durch den geschlossenen Schalter ein Strom, welcher den mittleren Strom im Zwischenspeicher 1 erhöht, um eine halbe Modulationsperiode später im Rahmen der Energierückführung als sogenannter Kommutierungsstrom wieder zurückzufließen.

In dem Falle, wenn für die Schalter 3 und 4 MOS-Transistoren eingesetzt werden, erfolgt der Stromrückfluß nicht durch das eigentliche aktive Element, sondern durch eine intern vorhandene parasitäre Inversdiode, die unvermeidbarer Bestandteil des Transistors ist. Diese Inversdioden benötigen nach einer zeitweiligen Beaufschlagung mit einem Rückstrom eine geraume Erholungszeit, so daß der MOS-Transistor nur sehr verzögert abgeschaltet werden kann. Dieser verhält sich also im Anschluß an eine Beaufschlagung mit einem Rückstrom einige Zeit wie ein völliger Kurzschluß.

Betriebsbedingt fließen in der zur Energierückspeisung beschriebenen Halbbrücke aus dem Energiespeicher 1 stammende und dort induzierte langanhaltende Rückströme, die mit der Modulationsfrequenz pulsieren und ohne äußere Maßnahmen ein Mehrfaches der Periode der angestrebten hohen Taktfrequenz von 100 kHz andauern. Fließt ein solcher Strom z.B. durch den Schalter 3 invers in die obere Versorgungsspannung UB/2 hinein und wird anschließend betriebsbedingt der Schalter 3 gesperrt und der Schalter 4 geschlossen, entsteht während der Erholungszeit des Schalters 3 in der Schalterstrecke 3, 4 ein Kurzschluß, da der Schalter 3 nicht sofort öffnen kann. Dies wiederholt sich mit der Folgefrequenz bzw. Taktfrequenz und bewirkt einen wesentlichen Anteil der Verluste innerhalb der Schaltungsanordnung.

Wie Fig. 2 zeigt, werden die MOS-Transistoren durch eine spezielle externe Diodenschaltung verändert. Konkret wird zur Schaltstrecke eine externe Sperrdiode 10 in Reihe geschaltet, wobei diese Reihenschaltung von einer zur externen Sperrdiode 10 entgegengesetzt gepolten Kommutierungsdiode 11 überbrückt ist.

Mit einer derartigen Anordnung kann das Schaltverhalten optimiert und die Verlustleistung der Schaltungsanordnung insgesamt stark verringert werden.

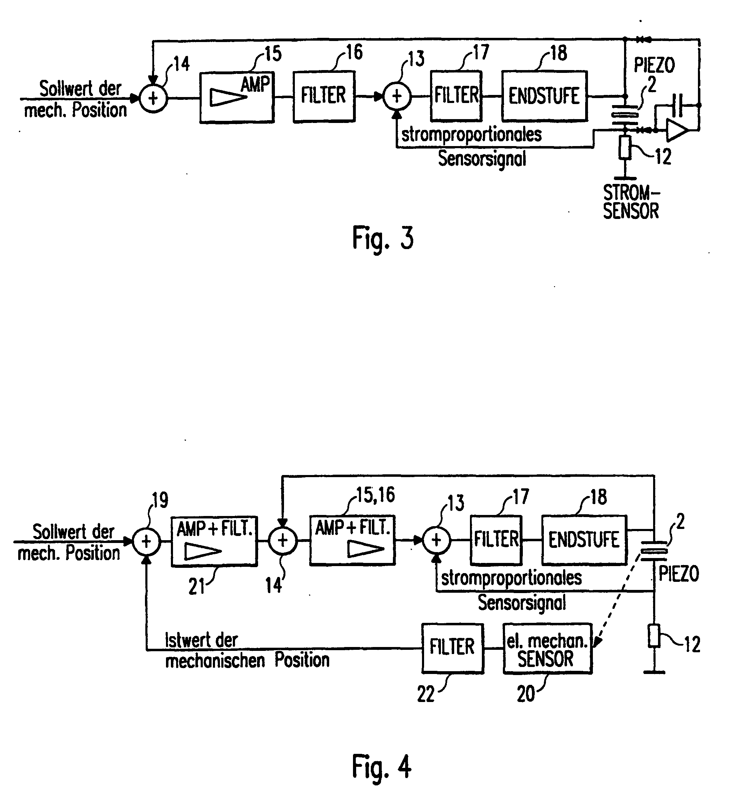

Beim Regelkonzept nach Fig. 3 wird von einem inneren Stromregelkreis kombiniert mit einem äußeren Spannungsregelkreis ausgegangen. Der äußere Spannungsregelkreis kann auch so ausgeführt werden, daß anstelle einer Regelung einer zum Sollwert proportionalen Ausgangsspannung das Integral des Piezotranslator-Stroms erfaßt und rückgeführt wird. Auf diese Alternative kann frequenzabhängig, beispielsweise bei f>10 Hz zurückgegriffen werden, so daß sich das dynamische Verhalten eines entsprechenden Regelkreises für einen Piezotranslator verbessert.

Zur Regelung des Piezotranslators 2 ist gemäß Fig. 3 im Sekundärkreis ein Stromsensor 12 vorgesehen, welcher eine dem Ausgangsstrom proportionale Steuerspannung erzeugt. Dieser Stromsensor 12 führt auf einen ersten Eingang eines ersten Reglers 13, wobei der zweite Eingang des ersten Reglers 13 am Ausgang eines zweiten Reglers 14, ggfs. unter Zwischenschaltung eines Verstärkers und eines Filters 15 und 16 anliegt. Am Eingang des zweiten Regles 14 liegt einerseits ein vorgegebener Sollwert entsprechend der mechanischen Position des Piezotranslators und andererseits die rückgeführte Spannung des Sekundärkreises bzw. das Integral des Piezotranslator-Stroms an.

Die über ein Filter 17 vom Ausgang des ersten Reglers 13 angesteuerte Endstufe 18 kann der Schaltungsanordnung zur Ansteuerung nach Fig. 1 entsprechen, jedoch auch durch zwei Sperrwandler nach dem Stand der Technik gebildet werden. Der durch den Stromsensor 12 und den ersten Regler 13 gebildete innere Regelkreis umschließt die Endstufe 18 einschließlich einer möglichen kritischen Resonanzstelle, die durch zur Energierückführung eingebrachte magnetische Energiespeicher und die kapazitive Last des Piezotranslators 2 gebildet wird. Um den durch den Sollwert der Position festgelegten und am Verstärkerausgang mit verstärkter Amplitude erwarteten Verlauf der Ausgangsspannung zu erzeugen, ist der äußere Regelkreis aus zweitem Regler 14 mit Spannungsrückführung vorgesehen.

Im Falle der Rückführung des Integrals des Piezotranslatorstroms bewirkt der äußere Regelkreis aus zweitem Regler 14 einen entsprechend vorverzerrten Verlauf der Verstärkerausgangsspannung, der jedoch einem weitgehend gleichartigen Verlauf der tatsächlich vom Piezotranslator 2 ausgeführten Bewegung mit dem Sollwert der Position, ohne Verfälschung durch Hystereseeffekte des Translators, entspricht.

Die Ausführungsform nach Fig. 4 stellt eine zusätzliche Positionsregelung dar, wobei hinsichtlich des inneren und äußeren Regelkreises auf die Erläuterungen zur Fig. 4 verwiesen wird. Gleiche Elemente wurden mit gleichen Bezügszeichen versehen.

Zur Positionsregelung ist ein dritter Regler 19 vorgesehen, an dessen erstem Eingang der Sollwert der mechanischen Position des Piezotranslators 2 und an dessen zweitem Eingang ein über einen Sensor 20 erfaßter mechanischer Istwert des Piezotranslators 2 anliegt. Der Ausgang des dritten Reglers 19 ist auf einen entsprechenden Eingang des zweiten Reglers 14 ggfs. unter Zwischenschaltung einer Verstärker-Filter-Kombination 21 geführt.

Das Schalten und Betätigen der Schalter 3 und 4 mit einer Taktfrequenz von ca. 100 kHz erzeugt in der Spule 1 und somit im Ausgangsstrom eine Restwelligkeit. Obwohl diese hochfrequente Überlagerung am Piezotranslator 2 keine einheitliche mechanische Bewegung mehr erzeugt, bewirkt sie dennoch je nach Keramikart eine erhebliche mechanische Belastung dieses Stellelements durch starke Partialschwingungen.

Gemäß einem weiteren Ausführungsbeispiel kann eine Reduzierung der dem Ausgangsstrom überlagerten Stromwelligkeit wie folgt erreicht werden.
Parallel zum Piezotranslator wird ein Serien-Resonanzkreis, gebildet aus einer Induktivität und einem Kondensator angeordnet. Beide Bauteile bewirken einen auf die hohe Taktfrequenz von 100 kHz abgestimmten Resonanzkreis. Dieser leitet den hochfrequenten Strom zur Masse ab und somit am Piezotranslator 2 vorbei. Der hierdurch entstehende Vorteil kann unter Lebensdaueraspekten entweder für den Piezotranslator 2 oder zur weiteren Verkleinerung der Induktivität 1 genutzt werden.

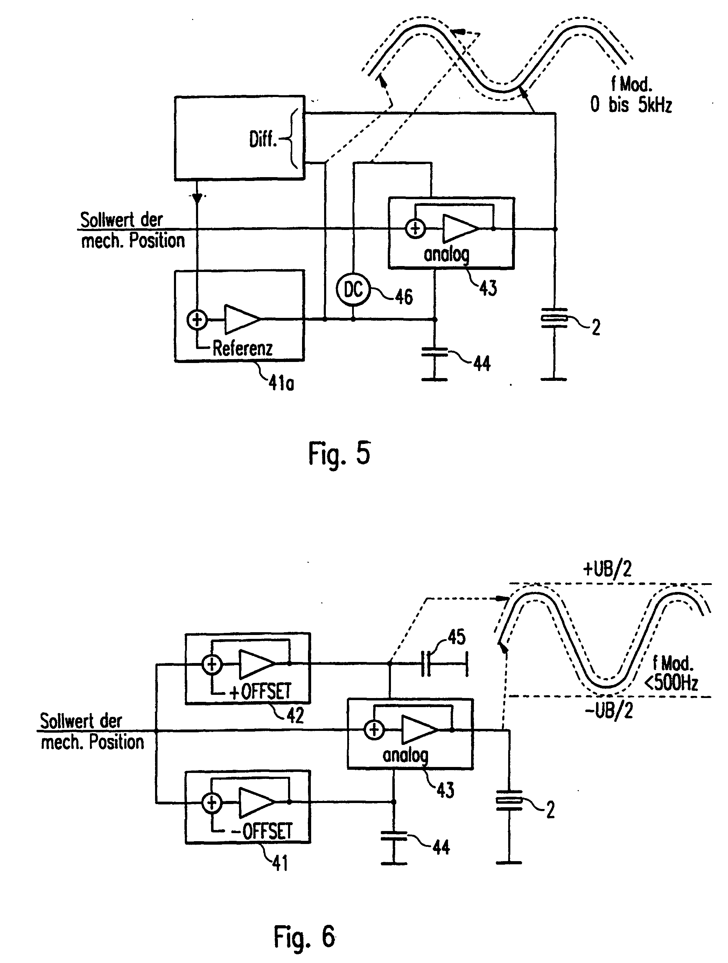

Wie in der Fig. 5 dargestellt, besteht durch eine schaltungstechnische Erweiterung die Möglichkeit des Reduzierens des niederfrequenten Ausgangs-Spannungsrauschens der Schaltungsanordnung.

Bedingt durch die rasch wechselnden hohen Schaltströme und -spannungen tritt am Ausgang eines aus Gründen der Energierückgewinnung geschalteten Verstärkers, unabhängig und überlagert zu der gewünschten Modulation, eine Störspannung in Form einer niederfrequenten Rauschspannung auf. Dies besonders dann, wenn die vom Regler der Endstufe zugeführte hochfrequente Pulsfolge einen sogenannten Jitter, d.h. ein statistisch verteiltes Zittern der darin enthaltenen Schaltzeitpunkte enthält.

Die der gewünschten Piezospannung unerwünscht überlagerte Rauschspannung beeinträchtigt die Einhaltung einer stabilen mechanischen Position des Stellelements Piezotranslator im Falle der Ansteuerung mit einem festen Sollwert. Entsprechende mechanische Schwankungen sind aber auch einer erwünschten Modulation überlagert.

Es wurde bereits vorgeschlagen, das Problem des stärkeren Rauschens geschalteter Verstärker dadurch zu umgehen, daß zwischen diese und der eigentlichen Last eine zusätzliche Endstufe zur Feinausregelung geschaltet wird. Diese Endstufe arbeitet in herkömmlicher, verlustbehafteter, analoger Technik in Form variabler Widerstände und erzeugt ein relativ rauschfreies Ausgangssignal. Da die nachgeschaltete Endstufe mit der grob vorgeregelten Ausspannungsspannung des geschalteten Verstärkers versorgt wird, die für diesen Zweck um einen kleinen festen Betrag höher einstellbar ist, fällt an ihr nur eine vernachlässigbare Verlustleistung an. Im Gegensatz zu den häufigeren Ohm'schen Lasten, die keine aktive Entladung benötigen, müssen für die kapazitiven Piezotranslatoren geeignete Verstärker eine solche beinhalten.

Gemäß Fig. 6 ist es bekannt, zwei komplett geschaltete Verstärker 41 und 42 in herkömmlicher Art (wie Fig. 3, jedoch ohne innere Stromregelung) zu benutzen, um die für die Feinausregelung der nachgeschalteten analogen Entstufe 43 erforderliche positive und negative Versorgungsspannung auf entsprechende Weise bereitzustellen.

Hierfür führen die Baugruppen 41 und 42 ihre jeweiligen Ausgangsspannungen auf ihre internen Verstärkerregelkreise 14 gemäß Fig. 3 zurück und vergleichen diese mit dem Sollwert der mechanischen Position, fügen jedoch noch einen geringen festen Versatz hinzu, der den Verstärker 41 um einen kleinen festen Betrag nach unten und den Verstärker 42 um denselben Betrag nach oben verschiebt.

Die beiden Kondensatoren 44 und 45, beide in ihrer Kapazität gering gegen die Kapazität des Piezotranslators 2, stellen die für die Funktion der geschalteten Verstärker erforderliche Siebung von der Schaltfrequenz dar.
Der nachgeschaltete Verstärker 43 erzeugt mit einem eigenen, hier nicht dargestellten Regelkreis an seinem Ausgang die korrekte, wiederum nur wenig rauschende Ausgangsspannung, die dem Piezotranslator 2 zugeführt wird.

Der Nachteil der oben beschriebenen Schaltungsanordnung besteht darin, daß es regelungstechnisch nur in begrenztem Umfang möglich ist, zwischen den beiden Ausgängen der Verstärker 41 und 42 eine geringe Differenz fester Größe stabil aufrechtzuerhalten. Dies ist zwar im Falle von statischen mechanischen Sollwerten und im unteren Modulationsbereich noch denkbar, nicht jedoch aber im Bereich der höherfrequenten Modulation um 2 kHz. Die verstärkereigenen und unvermeidlichen Phasenverschiebungen in den beiden Verstärkern 41 und 42 erreichen dort Werte um 90° und ein Gleichlauf ist in diesen Verstärkern kaum zu erreichen.

Ein bereits kleiner Phasenunterschied zwischen den Verstärkern 41 und 42 reicht aber bereits aus, um die gewünschte kleine Regeldifferenz mehrfach zu übertreffen. Spätestens aber beim Erreichen der nur unzureichend unterdrückten Resonanzstellen werden die Gleichlaufprobleme unüberwindbar. Die im Prinzip bekannte Lösung der Rauschverbesserung ist demnach im eigentlich interessierenden hohen Frequenzbereich der Modulation nicht anwendbar.

Bei Beschränkung auf den unteren Frequenzbereich werden dagegen die vorgeschalteten energiesparenden Schaltverstärker 41 und 42 eher uninteressant, da aufgrund fallender Ströme im Piezotranslator 2 ohnehin nur geringe Leistungswerte auftreten.

Wie in der Fig. 5 dargestellt, wird gemäß einem weiteren Ausführungsbeispiel anstelle der Verstärker 41 und 42 nur ein Verstärker 41a ausgebildet, was den Gesamtaufwand erheblich reduziert.

Die Ausgangsspannung dieses Verstärkers ist weiterhin etwas geringer als die am Piezotranslator 2 erwartete Ausgangsspannung. Durch die gegenüber dem Verstärker 41 zusätzliche Ausstattung mit einem inneren Stromregelkreis 13 (entsprechend Fig. 3) werden im Verstärker 41a eventuelle Resonanzstellen wirksam unterdrückt.

Die nachgeschaltete Endstufe 43 zur Feinausregelung wird ebenso wie der Kondensator 44 übernommen.

Der bekannte obere Verstärker 42 (Fig. 6) wird durch eine zusätzliche neue Spannungsquelle 46 ersetzt. Diese ist ebenfalls am Ausgang des Verstärkers 41a angeschlossen und beinhaltet zur Abblockung einen internen eingebauten Kondensator ausreichender Größe.

Die Größe der Gleichspannungsquelle 46 entspricht der bisherigen geregelten Differenz zwischen den Ausgängen 41 und 42 und ist klein gegen die am Piezotranslator 2 zuführbare maximale Arbeitsspannung. Sie entspricht im wesentlichen dem doppelten Spitzenwert der am Ausgang des Verstärkers 41 auftretenden Rauschspannung.

Der Ausgang des verlustbehafteten Verstärkers 43 wird mit einem ersten Regelkreis durch Rückführung der Spannung des Piezotranslators 2, seines Ladungsintegrals oder eines mechanischen Sensors 20 (ähnlich Fig. 3 oder 4) auf den korrekten rauschfreien und gegen den Sollwert der mechanischen Position verstärkten Wert geregelt.

Im Regler des Verstärkers 41a befindet sich zunächst der innere Stromregelkreis 13. Zur Regelung der Ausgangsspannung vom Verstärker 41a wird dagegen ein eigener und vom Verstärker 43 unabhängig arbeitender zweiter Spannungsvergleich durchgeführt, wie dies beim bekannten Stand der Technik vorgesehen ist. Die für den Regler 14 zuständige Größe ist allein die Differenz der Ausgangsspannungen der Verstärker 41a und 43, die direkt abgegriffen und dem Regler 14 zugeführt wird. Ebenso erfolgt der Vergleich nicht mehr gegen den Sollwert der mechanischen Position, sondern gegen eine feste Referenzspannung mit der zur Quelle halbierten Größe.

Die für den Verstärker 43 verfügbare Versorgungsspannungs-Spannungsreserve wird also nicht mehr aus der Differenz der unabhängigen Messung zweier Größen gebildet, die durch Phasenfehler leicht verfälscht werden kann, sondern direkt gemessen und geregelt.

Der sich aus dem Ausführungsbeispiel nach Fig. 5 ergebende Vorteil liegt im folgenden. Die Verwendung der festen Spannungsquelle 46 erlaubt die völlige Einsparung eines erheblich aufwendigeren zweiten Schaltverstärkerss 42. Dadurch werden die dort auftretenden Verlustleistungen eingespart. Durch Anwendung der resonanzunterdrückten Stromregelung im Verstärker 41a zusammen mit der direkt geregelten Symmetrie der Arbeitsspannung für den Verstärker 43 ist ein Arbeiten im gesamten früheren Frequenzbereich des Verstärkers 41a uneingeschränkt möglich.

Alles in allem gelingt es mit der erfindungsgemäßen Schaltungsanordnung sowie dem vorgeschlagenen Regelungskonzept, Piezotranslatoren als elektrische Stellelemente exakt und mit geringem schaltungstechnischen Aufwand anzusteuern, wobei gleichzeitig eine Optimierung der Energierückführung möglich wird. Durch den Aufbau des Regelkreises mit oder ohne zusätzliche Positionsregelung können Auswirkungen unerwünschter Nichtlinearitäten des Piezotranslators, wie Hystereeffekt und Langzeitdrift vermieden werden.

### Bezugszeichenaufstellung

- 1: Zwischenspeicher
- 2: Piezotranslator
- 3, 4: Schalter
- 5, 6: Rückspeisedioden
- 7, 8: Spannungsquellen UB/2
- 9: MOSFETs
- 10: externe Sperrdiode
- 11: Kommutierungsdiode
- 12: Stromsensor
- 13: erster Regler
- 14: zweiter Regler
- 15: Verstärker
- 16, 17, 22: Filter
- 18: Endstufe
- 19: dritter Regler
- 20: mechanischer Positions-Sensor
- 21: Verstärker-Filter-Kombination
- 41, 42: Schaltverstärker
- 41a: Schaltverstärker inclusive Stromregelung
- 43: analoger Verstärker in rauscharmer Ausführungsform
- 44, 45: Siebkondensatoren
- 46: DC-Spannungsquelle

## Patentansprüche

1. Schaltungsanordnung zur dynamischen Ansteuerung von Piezotranslatoren (2) mit Energierückgewinnung durch einen einzigen induktiven Zwischenspeicher (1), der mit den Piezotranslatoren (2) in Reihe angeordnet ist sowie mit getakteten Schaltern (3, 4),
**dadurch gekennzeichnet, daß**
zur Erzielung eines vorgegebenen linearen Spannungsverlaufs am Piezotranslator (2) der Sekundärkreis als eine aus den Schaltern (3, 4) bestehende Halbbrücke ausgebildet ist, an deren Ausgang der induktive Zwischenspeicher (1) in Reihe mit dem Piezotranslator (2) angeordnet ist, wobei die Schalter (3, 4) mit hoher Takt- oder Schaltfrequenz derart extern angesteuert und betrieben werden, daß der Zwischenspeicher abwechselnd höchstens mit einer oberen oder unteren Versorgungsspannung (UB/2) verbunden ist, wobei die Reihenschaltung von Piezotranslator (2) und induktivem Zwischenspeicher (1) von einem überlagerten Brückengleichstrom durchflossen ist.

2. Schaltungsanordnung nach Anspruch 1,
**dadurch gekennzeichnet, daß**
die Schalter (3, 4) als MOS-Transistoren (9) ausgebildet sind, wobei zur Schaltstrecke eine externe Diode (10) in Reihe angeordnet und diese Reihenschaltung von einer zur externen Diode (10) entgegengesetzt gepolten Kommutierungsdiode (11) überbrückt ist.

3. Schaltungsanordnung nach einem der vorangegangenen Ansprüche,
**dadurch gekennzeichnet, daß**
zur Regelung der Anordnung im Sekundärkreis des Piezotranslators (2) ein Stromsensor (12) zur Erzeugung einer dem Ausgangsstrom der Endstufe (18) proportionalen Steuerspannung angeordnet ist, welche auf einen ersten Eingang eines ersten Reglers (13) führt, wobei der zweite Eingang des ersten Reglers (13) am Ausgang eines zweiten Reglers (14) anliegt, an dessen beiden Eingängen ein vorgegebener Sollwert entsprechend der mechanischen Position des Piezotranslators (2) und ein zur Ausgangsspannung der Endstufe (18) proportionaler Istwert anliegt.

4. Schaltungsanordnung nach Anspruch 3,
**dadurch gekennzeichnet, daß**
zur Positionsregelung ein dritter Regler (19) vorgesehen ist, daß dessen erstem Eingang der Sollwert der mechanischen Position des Piezotranslators (2) und an dessen zweitem Eingang ein über einen Sensor (20) erfaßter mechanischer Istwert des Piezotranslators (2) anliegt und der Ausgang des dritten Reglers (19) auf einen der Eingänge des zweiten Reglers (14) führt.

5. Schaltungsanordnung nach Anspruch 3,
**dadurch gekennzeichnet, daß**
der zweite Regler (14) anstelle einer zur Ausgangsspannung der Endstufe (18) proportionalen Spannung das Integral des Piezotranslator-Stroms rückführt.

## Claims

1. A circuit arrangement for the dynamic control of piezotranslators (2) with energy recovery by means of a single inductive intermediate store (1) which is arranged in series with the piezotranslators (2) as well as by clocked switches,
**characterised in that**
for achieving a predetermined linear voltage characteristic at the piezotranslator (2), the secondary circuit is designed as a half-bridge consisting of the switches (3, 4) at whose output the inductive intermediate store (1) is arranged in series with the piezotranslator (2), with the switches (3, 4) being externally controlled and operated at a high cycle or switching frequency in such a manner that the intermediate store is alternately connected with an upper or lower supply voltage ((UB/2) at the most, with the series connection of piezotranslator (2) and inductive intermediate store (1) carrying a superimposed bridge direct current.

2. The circuit arrangement according to Claim 1,
**characterised in that**
the switches (3, 4) are formed as MOS transistors (9), with an external diode (10) being connected in series with the clearance between contacts, and this series connection being bridged by a commutating diode (11) which is oppositely poled to the diode (10).

3. The circuit arrangement according to one of the previous claims,
**characterised in that**
a current sensor (12) for generating a control voltage which is proportional to the output current of the final stage (18) is arranged in the secondary circuit of the piezotranslator (2) for controlling the arrangement, with the control voltage being connected with a first input of a first controller (13), the second input of the first controller (13) being applied at the output of the second controller (14), at whose two inputs a predetermined reference variable according to the physical position of the piezotranslator (2) and an actual value which is proportional to the output voltage of the final stage (18) are applied.

4. The circuit arrangement according to Claim 3,
**characterised in that**
a third controller (19) is provided for the positioning control, at whose first input the reference variable of the physical position of the piezotranslator (2) and at whose second input a mechanical actual value which is detected via a sensor (20) of the piezotranslator (2) are applied, with the output of the third controller (19) being connected with one of the inputs of the second controller (14).

5. The circuit arrangement according to Claim 3,
**characterised in that**
the second controller (14) feeds back the integral of the piezotranslator current in lieu of a voltage which is proportional to the output voltage of the final stage (18).

## Revendications

1. Agencement de circuit pour commander dynamiquement des piézo-translateurs (2) avec récupération d'énergie par une unique mémoire intermédiaire inductive (1), qui est montée en série avec les piézo-translateurs, ainsi qu'avec des commutateurs temporisés (3, 4),
**caractérisé en ce que**, pour obtenir un profil de tension linéaire prédéterminé sur le piézo-translateur (2), le circuit secondaire est conformé en demi-pont composé des commutateurs (3, 4), à la sortie duquel la mémoire intermédiaire inductive (1) est montée en série avec le piézo-translateur, les commutateurs (3, 4) étant commandés et exploités de manière externe avec une fréquence de commutation ou d'alternance élevée, de telle manière que la mémoire intermédiaire est reliée en alternance au plus avec une tension d'alimentation haute ou basse (UB/2), le montage série du piézo-translateur (2) de la mémoire intermédiaire inductive (1) étant traversé par un courant continu de pont superposé.

2. Agencement de circuit selon la revendication 1, **caractérisé en ce que** les commutateurs (3, 4) sont conformés en transistors CMOS (9), une diode externe (10) étant montée en série à la ligne de commutation et ce montage série étant ponté par une diode de commutation (11) de polarisation inverse de la diode externe (10).

3. Agencement de circuit selon l'une des revendications précédentes, **caractérisé en ce que**, pour réguler l'agencement dans le circuit secondaire du piézo-translateur (2), un capteur de courant (12) servant à produire une tension de commande proportionnelle au courant de sortie de l'étage final (18) est prévu, qui conduit à une première sortie d'un premier régulateur (13), la deuxième sortie du premier régulateur (13) étant présente sur la sortie d'un deuxième régulateur (14), aux deux extrémités duquel s'applique une valeur de consigne prédéterminée correspondant à la position mécanique du piézo-translateur (2) et une valeur réelle proportionnelle à la tension de sortie de l'étage final (18).

4. Agencement de circuit selon la revendication 3, **caractérisé en ce qu'**un troisième régulateur est prévu pour réguler la position, **en ce que** la valeur de consigne de la position mécanique du piézo-translateur (2) s'applique sur sa première entrée et une valeur réelle mécanique du piézo-translateur (2) relevée par un capteur (20) s'applique sur sa deuxième entrée, et la sortie du troisième régulateur (19) conduit à l'une des entrées du deuxième régulateur (14).

5. Agencement de circuit selon la revendication 3, **caractérisé en ce que** le deuxième régulateur (14) réinjecte, au lieu d'une tension proportionnelle à la tension de sortie de l'étage final (18), l'intégrale du courant du piézo-translateur.
